# EUROPÄISCHE PATENTSCHRIFT

(11) **EP 3 191 803 B1**
(45) Veröffentlichungstag und Bekanntmachung des Hinweises auf die Patenterteilung: **11.03.2020**
(21) Anmeldenummer: 15763543.4
(22) Anmeldetag: 09.09.2015
(51) Int. Cl.: G01F 1/44

(54) **ROHR ZUR MESSUNG DES DIFFERENZDRUCKS EINES DAS ROHR DURCHFLIESSENDEN MEDIUMS**
TUBE FOR MEASURING THE DIFFERENTIAL PRESSURE OF A MEDIUM FLOWING THROUGH THE TUBE
TUBE SERVANT À MESURER UNE PRESSION DIFFÉRENTIELLE D'UN FLUIDE PARCOURANT LE TUBE

(30) Priorität: 12.09.2014 DE 102014013242; 14.10.2014 DE 102014114891; 21.10.2014 DE 102014115289
(43) Veröffentlichungstag der Anmeldung: 19.07.2017
(73) Patentinhaber: systec Controls Mess- und Regeltechnik GmbH, 82178 Puchheim (DE)
(72) Erfinder: BETZ, Oliver, 82194 Gröbenzell (DE)
(74) Vertreter: Braun-Dullaeus Pannen Emmerling Patent- & Rechtsanwaltspartnerschaft mbB
(86) Internationale Anmeldenummer: PCT/EP2015/070570
(87) Internationale Veröffentlichungsnummer: WO 2016/038073

(56) Entgegenhaltungen:
- EP-A1- 0 923 711
- WO-A1-2005/088263
- DE-B- 1 007 512

## Beschreibung

Die Erfindung betrifft ein Rohr zur Messung des Differenzdrucks eines das Rohr durchfließenden Mediums.

Je nach Medium und Strömungsgeschwindigkeit unterscheiden sich die Profile und Durchmesser von Differenzdruckmessern deutlich. Anwendung finden verschiedene Formen, die in üblicherweise als Zwischenstück Rohrleitung eingeflanscht werden. Die eingesetzten Zwischenstücke können beispielsweise düsenförmig ausgebildet sein oder umfassen Blenden, die quer zur Strömungsrichtung in das vom Medium durchflossen Rohr eingesetzt werden. Es ist somit eine Vielzahl von Differenzdruckmessern bekannt, deren jeweilige Ausgestaltung auf einen speziellen Anwendungsbereich optimiert ist. Nachteilig daran ist, dass diese Vielzahl von möglichen Formen dazu führt, dass die jeweiligen Rohre aufwändige Einzelanfertigungen sind oder nur in Kleinserien gefertigt werden können.

WO 2005/088263 A1, DE 10 07 512 B und EP 0 923 711 A1 offenbaren jeweils ein Rohr zur Messung des Differenzdrucks eines das Rohr durchfließenden Mediums.

Aufgabe der Erfindung ist es, ein Rohr zur Messung eines Differenzdrucks eines in ihm strömenden Mediums vorzuschlagen.

Diese Aufgabe wird gelöst mit einem Rohr gemäß dem unabhängigen Anspruch 1. Die vorteilhaften Ausführungsformen sind in den abhängigen Ansprüchen 2-8 definiert. Erfindungsgemäß umfasst das Rohr einen rohrförmigen Träger und ein rohrförmiges Einschubelement, wobei das Einschubelement an der Innenwand des Trägers angeordnet ist, und wobei das Einschubelement zumindest Teilbereiche eines Innenprofils des Rohres ausbildet. Ein Grundgedanke der Erfindung ist es somit, dass zur Differenzdruckmessung genutzte Rohr in einen als Träger wirkendes Außenteil und ein zu mindestens Teilbereiche des Profils ausbildendes Einschubelement respektive Inlay aufzuteilen. Dies erlaubt eine weitgehende Standardisierung des Trägers. Zur Anpassung an das jeweilige Medium und dessen Strömungsgeschwindigkeit muss lediglich ein hierauf optimiertes Einschubelement in den Träger eingesetzt werden. Von besonderem Vorteil ist, dass der Durchmesser des Einschubelements und dessen Verlauf quasi frei wählbar ist. Er kann also auf die im Rohr zu erwartende Strömung angepasst werden und zwar derart, dass für diese Strömung ein ausreichender Differenzdruck gemessen werden kann. Dies erlaubt es, das Rohr für seinen Einsatzbereich besser kalibrieren zu können. Mit rohrförmig in Sinne der Anmeldung sind nicht zwingend kreisrunde Rohre gemeint. Prinzipiell ist die Erfindung ganz allgemein für Rohre geeignet. Der Begriff rohrförmig bildet somit auch anderer Formen von Rohren ab.

Dabei spielt es keine Rolle, ob das Innenprofil des Rohres eine Düse oder eine Blende ausbilden soll. Erfolgt die Differenzdruckmessung beispielsweise mithilfe einer Venturi-Düse, kann das Einschubelement so ausgebildet sein, dass es mindestens Teilbereiche des Einlaufprofils und/oder der Einschnürung und/oder des Auslaufprofils ausbildet. Mittels des Einschubelements kann das Rohr demzufolge auf beliebige Querschnitte und Durchmesser angepasst werden.

Von Vorteil ist es außerdem, dass Material und Fertigungsprozess des Einschubelements nicht mit dem des Trägers übereinstimmen müssen. Vielmehr ist es möglich, Material und Fertigungsprozess für das Einschubelement je nach Anwendungsgebiet zu differenzieren. So sind Anwendungen denkbar, bei denen das Einschubelement aus Kunststoff bestehen kann und deshalb besonders einfach zu fertigen ist. Andere Anwendungsgebiete benötigen ein beispielsweise mittels CNC gefertigtes Einschubelement aus Metall. Insofern behandelt ein weiterer Grundgedanke dieser Anmeldung das erfindungsgemäße Einschubelement und seiner vorteilhaften Ausführungsform.

Erfindungsgemäß weist der Träger zwei die Wand des Trägers durchdringende Kanäle auf, die in Strömungsrichtung des Mediums hintereinander angeordnet sind. Diese Ausführungsform des Trägers ermöglicht es einer am Träger angeordneten Sensorik an verschiedenen Abschnitten des Rohres die dort vorherrschenden Druckverhältnisse abzugreifen und so einen Differenzdruck zu ermitteln.

Erfindungsgemäß ist zwischen dem Einschubelement und der Innenwand des Trägers eine die Außenfläche des Einschubelements umlaufende Nut angeordnet, wobei die umlaufende Nut einerseits über eine im Einschubelement vorgesehene Mehrzahl von Bohrungen mit dem vom Medium durchflossenen Innenraum des Einschubelements verbunden ist und andererseits mit einen der Kanäle verbunden ist. Eine derart die Außenfläche des Einschubelements umlaufende Nut bildet eine Ringkammer aus. Solche Ringkammern werden genutzt, um die an verschiedenen Stellen des Umfangs vorherrschende Druckverhältnisse mitteln zu können. Ihr Einsatz bei der Differenzdruckmessung und die hierdurch erreichten Vorteile sind allgemein bekannt.

Ein wesentlicher Unterschied zu den vorbekannten Ringkammern liegt nun darin, dass die erfindungsgemäße Ringkammer nicht außen am Rohr, sondern zwischen Träger und Einschubelement angeordnet ist. Hierdurch entfallen die ansonsten erforderlichen mehrfachen Kanäle durch die Rohrwand, mit denen der Innenraum des Rohres und die Ringkammer verbunden sind. Zudem muss lediglich der Kanal genormt sein, der die Sensorik des Differenzdruckmessers mit der Ringkammer, respektive dem Ringsspalt verbindet. Sämtliche anderen Maßangaben sind im wesentlichen frei wählbar.

Hieraus ergibt sich auch ein besonderer Vorteil des nicht erfindungsgemäßen Verfahrens zur Ausbildung eines Rohres zur Messung des Differenzdrucks eines das Rohr durchfließenden Mediums. Zum einen muss lediglich ein für die gegebenen Bedingungen geeignetes Einschubelement ausgewählt werden, welches einfach in den weitestgehend genormten Träger eingesetzt wird. Darüber hinaus ist das erfindungsgemäße Rohr besonders einfach zusammen zu bauen. Das Einschubelement muss lediglich seitlich am Träger und dort koaxial zu ihm angeordnet werden und anschließend in den Träger eingeführt werden. Mit diesem Einschieben geht bereits die Ausbildung der Ringkammer einher, so dass kein separater Fertigungsschritt erforderlich ist.

Die erfindungsgemäße Nut kann dabei in der Innenwand des Trägers und/oder in der Außenwand des Einschubelements ausgebildet sein. Fertigungstechnisch ist es von Vorteil, wenn die Nut in der Außenwand des Einschubelements vorgesehen wird. Diese Fläche ist für eine Bearbeitung besonders leicht zu erreichen. Wird das Einschubelement mittels Guss oder ähnlicher Formgebungsprozesse gefertigt, lässt sich die Nut bereits in der Form vorsehen und kann mit ausgeformt werden. Ein weiterer Vorteil der vorgeschlagenen Ringkammer ist somit, dass sie durch Materialeinsparung ausgebildet werden kann.

Vorzugsweise umläuft die Nut nur Teilbereiche der Außenfläche des Einschubelements. Vollständige umlaufende Ringkammern haben den Nachteil, dass sich im Medium vorhandene Feuchtigkeit oder durch Temperaturschwankungen entstehendes Kondensat aufgrund der Schwerkraft an der tiefsten Stelle der Ringkammer sammelt. Aufgrund der dort fehlenden Abflussmöglichkeit bildet sich mit der Zeit ein Flüssigkeitsreservoir aus. Friert das Flüssigkeitsreservoir ein, kann die damit einhergehende Volumenvergrößerung zu einer Beschädigung oder sogar Zerstörung der Ringkammer führen.

Erfindungsgemäß wird die Nut in der Form eines Kreisbogens ausgeführt. Eine derartige Nut bildet eine nicht vollständig das Außenprofil des Einschubelements umlaufende Ringkammer aus. Somit verläuft die Nut in Umfangsrichtung zwischen zwei voneinander beabstandeten Enden. Erfindungsgemäß ist es dabei; wenn der von der Nut gebildete Kreisbogen im Bereich seiner beiden Enden nach unten ausgerichtet ist. Dann sammelt sich die Flüssigkeit an beiden Enden des Kreisbogens und kann erfindungsgemäß durch jeweils eine in diesem Bereich ansetzende Bohrungen wieder in das Innenprofil des Einschubelements abgeleitet werden. Bei der Montage dieses Einschubelements im rohrförmigen Träger sollte somit auf die Positionierung der nicht vollständig umlaufenden Nut geachtet werden. Zur Erleichterung der Positionierung des Einschubelements können bekannte Maßnahmen, beispielsweise Markierungen oder Führungsnuten, eingesetzt werden.

Es ist somit von Vorteil, mehrere Bohrungen vorzusehen und deren Position auf den Verlauf der Nut abzustimmen. Dies lässt sich anhand einer bevorzugten Ausführungsform gut erläutern. Dabei bildet die Nut einen Kreisbogen von 270° aus und das Einschubelement wird so positioniert, dass die unteren 90° des Kreisumfangs nicht von der Nut umlaufen werden. Hier macht es Sinn, zu mindestens zwei Bohrungen vorzusehen, von denen jede eines der Enden des Kreisbogens mit dem Innenraum des Einschubelements zu verbinden. Werden beispielsweise vier Bohrungen vorgesehen, die gleichmäßig von einander beabstandete sein sollen, bilden sie eine Art X-Form bzw. um 45° gedrehte +-Form aus.

Die Kreisbogenform kann auch nachträglich in einer voll umlaufende Nut ausgebildet werden, beispielsweise durch Vergießen oder Einsetzen eines Inlays in den nicht mehr benötigten Teil der Nut. Für den Begriff Kreisbogen gilt das gleiche wie zuvor zum Begriff rohrförmig dargelegt. Unter dem Begriff kreisbogenförmige Nut im Sinne dieser Anmeldung ist nicht zwingend eine kreisrunde Ausbildung gemeint, sondern eine Nut, die erfindungsgemäß den Umfang des Einschubelements nicht vollständig umläuft.

Von besonderem Vorteil sind die Mehrzahl von Bohrungen im Einschubelement, da zum Beispiel aus Gründen der Rohrgeometrie an verschiedenen Stellen des Rohrquerschnitts unterschiedliche Geschwindigkeiten vorherrschen können. Durch mehrere, insbesondere in Umfangsrichtung gleichmäßig verteilte Bohrungen wird der in der Ringkammer vorherrschende Druck über den gesamten Querschnitt gemittelt.

Vorteilhaft für die Messgenauigkeit ist es, wenn das Einschubelement in Strömungsrichtung vor und/oder hinter der umlaufenden Nut gegen den rohrförmigen Träger abgedichtet ist.

In einer vorteilhaften Ausführungsform sind beidseitig der umlaufenden Nut die Außenfläche des Einschubelements umlaufende Dichtung vorgesehen. Beidseitig bedeutet, dass die Dichtungen in Strömungsrichtung vor und hinter der Nut angeordnet sind und den von der Nut gebildeten Kreisbogen oder den Umfang des Einschubelements ebenfalls vollständig umlaufen. Diese, insbesondere parallel zur Nut angeordneten und ringförmig ausgebildeten Dichtungen dichten die Ringkammer gegenüber Bereichen des Innenraums mit anderen Druckverhältnissen ab und verhindern somit eine Verfälschung der Messergebnisse. Wie bereits für die Nut dargelegt, können auch die Passungen für die Dichtung in der Innenwand des Trägers und/oder in der Außenwand des Einschubelements ausgebildet sein. Ist die Nut kreisbogenförmig ausgebildet, ist es von Vorteil, auch die Enden des Kreisbogens vollständig gegenüber den Bereichen des Innenraums mit anderen Druckverhältnissen abzudichten, also die Kontur der Enden vollständig mit einer Dichtung zu umfangen.

Alternativ oder in Kombination kann die Abdichtung der umlaufenden Nut auch auf andere Weise erfolgen. Eine weitere bevorzugte Ausführungsform stellt die Dichtigkeit der umlaufenden Nut zumindest teilweise mittels einer stoffschlüssigen Verbindung zwischen Träger und Einschubelement her. Je nach Wahl des Materials von Träger und Einschubelement kann die stoffschlüssige Abdichtung der Nut durch Kleben oder Ultraschallschweißen von Vorteil sein.

Von besonderem Vorteil ist es wenn das Einschubelement eine erste und eine zweite umlaufende Nut umfasst, wobei die erste Nut mit einem die Wand des Trägers durchdringende ersten Kanal und die zweite Nut mit einem die Wand des Trägers durchdringenden zweiten Kanal verbunden ist. Ein derartiges Einschubelement verbindet auf einfache Weise sowohl den ersten wie auch den zweiten Kanal jeweils mit einer Ringkammer. Die für die Differenzdruckmessung erforderlichen unterschiedlichen Wirkdrücke können hierdurch ohne erhöhten Montageaufwand über jeweils eine Ringkammer abgegriffen werden.

Natürlich ist es auch durchaus denkbar, die jeweiligen Ringkammern über separate Einschubelement auszubilden, also für jede Ringkammer ein eigenes Einschubelement vorzusehen. Insbesondere kann es vorgesehen sein, dass lediglich ein Einschubelement mit einem der beiden Kanäle zusammenwirkt. Der andere Kanal, der in Strömungsrichtung vor oder hinter dem Einschubelement angeordnet sein kann, verbindet dann auf vorbekannte Weise den Innenraum und die Differenzdruck-Sensorik.

Das Einschubelement kann auf vielfältige Art und Weise in dem Träger befestigt werden, beispielsweise mittels einer Presspassung. In einer besonders vorteilhaften Ausführungsform bildet ein Teilbereich der Innenwand des Trägers einen Sitz für das Einschubelement aus. Hierdurch kann das Einschubelement ohne großen Aufwand passgenau an der erforderlichen Position im Träger eingesetzt werden. Insbesondere wird dadurch die Positionierung bzw. Justage des Einschubelements deutlich erleichtert.

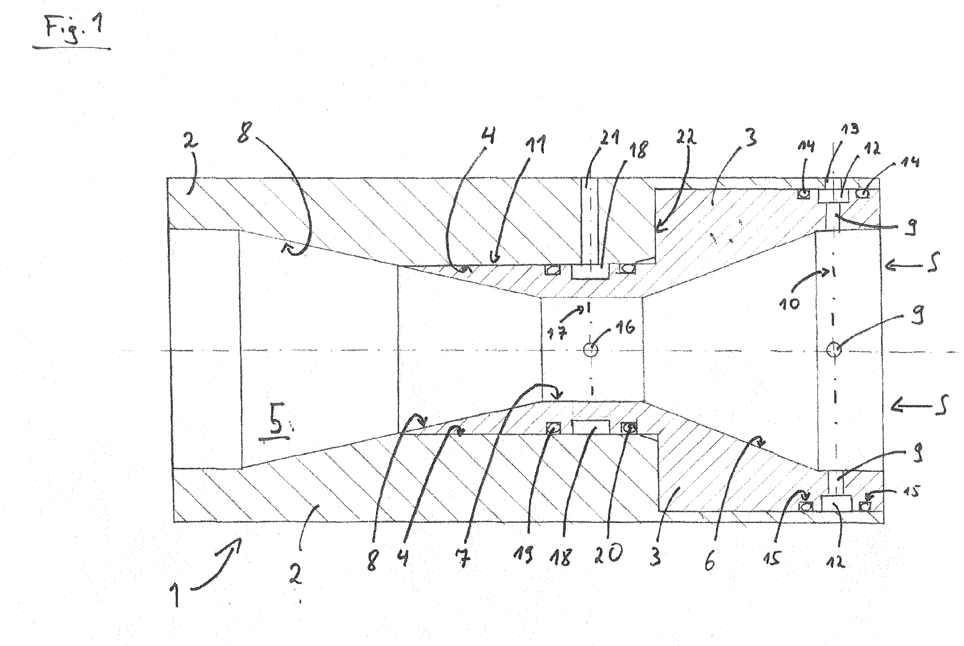

Eine vorteilhafte Ausführungsform der Erfindung wird anhand der Figur 1 näher beschrieben.

Die Figur 1 zeigt einen Schnitt durch ein erfindungsgemäßes Rohr 1. Nicht gezeigt werden hier die Befestigungsmittel, beispielsweise die Flansche, mittels derer das Rohr 1 in ein Leitungssystem integriert ist. Das Rohr 1 umfasst einen rohrförmigen Träger 2 und einen koaxial zum Träger 2 angeordnetes rohrförmiges Einschubelement 3. Das Einschubelement 3 liegt an einer Innenwand 4 des Trägers 2 an. Das Innenprofil 5 des Rohrs 1 wird größtenteils durch das Einschubelement 3 ausgebildet. So bildet das Einschubelement 3 ein Einlassprofil 6 in Form eines sich in Strömungsrichtung S verengenden Konus, einen Einschnürungsbereich 7 und teilweise ein Auslassprofil 8 aus, welches am Ende des Einschubelement 3 im Träger 2 fortgeführt wird. Das Auslassprofil 8 weist die Form eines sich in Strömungsrichtung S öffnenden Konus auf, so dass das hier gezeigte Rohr 1 eine Venturi-Düse ausbildet.

In Strömungsrichtung S gesehen vor dem Einlaufprofil 5 weist das Einschubelement 3 eine Mehrzahl von radial verlaufenden ersten Bohrungen 9 auf, welche auf einer Achse 10 angeordnet sind, die senkrecht zur Strömungsrichtung S angeordnet ist. Die Bohrungen 9 sind zwischen dem Innenraum der Venturi-Düse und einer in der Außenfläche 11 des Einschubelements 3 ausgebildeten ersten Nut 12 angeordnet und verbinden diese miteinander. Die erste Nut 12 umläuft den gesamten Umfang des Einschubelements 3. Sie formt hierdurch eine Ringkammer aus, deren radial äußere Begrenzung durch die Innenwand 4 des Trägers 2 gebildet ist. Die so gebildete Ringkammer weist eine weitere Öffnung in Form eines ersten Kanals 13 auf, welcher den Träger 2 durchläuft und es ermöglicht, die Ringkammer mit einer hier nicht gezeigten Sensorik des Durchflussmessers zu verbinden. Vorzugsweise ist die Sensorik an der Außenwand des Trägers befestigt. Die Nut 12 wird beidseitig durch zwischen Innenwand 4 des Trägers und Außenwand 11 des Einschubelements 3 angeordnete Dichtringe 14 abgedichtet. Die Dichtringe 14 sitzen jeweils in einer dafür vorgesehenen, in der Außenwand 11 ausgebildeten Ringnute. 15.

Im Bereich der Einschnürung 7 weist das Einschubelement 3 eine Mehrzahl von radial verlaufenden zweiten Bohrungen 16 auf, welche ebenfalls entlang einer senkrecht zur Strömungsrichtung S angeordneten Achse 17 angeordnet sind. Die zweiten Bohrungen 16 münden in einer zweiten Nut 18, welche analog zur ersten Nut 12 ausgebildet ist, also eine dem gemäße zweite Ringkammer ausbildet. Ebenso sind der Nut 18 entsprechende Dichtungen 19 zugeordnet, die in Ringnuten 20 eingepasst sind. Auch die zweite Ringkammer ist über einen den Träger 2 durchlaufenden zweiten Kanal 21 mit der bereits erwähnten Sensorik des Differenzdruckmessers verbindbar.

Die Innenwand 4 des Trägers 2 und die Außenwand 11 des Einschubelements 3 Weisen einen zu mindestens annähernd radial angeordneten Teilbereich auf, der einen Sitz 22 für das Einschubelement 3 ausbildet.

## Patentansprüche

1. Rohr zur Messung des Differenzdrucks eines das Rohr durchfließenden Mediums, wobei das Rohr (1) einen rohrförmigen Träger (2) und ein rohrförmiges Einschubelement (3) umfasst, wobei das Einschubelement (3) an der Innenwand (4) des Trägers (2) angeordnet ist, und wobei das Einschubelement (3) zumindest Teilbereiche eines Innenprofils (5) des Rohrs (1) ausbildet,
wobei zwei die Wand des Trägers (2) durchdringende Kanäle (13, 21) in Strömungsrichtung (S) des Mediums hintereinander angeordnet sind, und
wobei zwischen dem Einschubelement (3) und der Innenwand (4) des Trägers (2) eine die Außenfläche (11) des Einschubelements (3) umlaufende Nut (12, 18) angeordnet ist, wobei die umlaufende Nut (12, 18) einerseits über eine im Einschubelement (3) vorgesehene Mehrzahl von Bohrungen (9, 16) mit dem vom Medium durchflossenen Innenraum des Einschubelements (3) verbunden ist und andererseits mit einen der Kanäle (13, 21) verbunden ist, **dadurch gekennzeichnet,**
**dass** die Nut (12, 18) in der Form eines Kreisbogens ausgebildet ist,
**dass** die Nut (12, 18) den Umfang des Einschubelements (3) nicht vollständig umläuft,
**dass** der von der Nut (12, 18) gebildete Kreisbogen im Bereich seiner beiden Enden nach unten ausgerichtet ist,
**dass** eine sich an beiden Enden des Kreisbogens gesammelte Flüssigkeit durch jeweils eine in diesem Bereich ansetzende Bohrungen (9, 16) wieder in das Innenprofil des Einschubelements (3) abgeleitet werden kann.

2. Rohr nach Anspruch 1, **dadurch gekennzeichnet,**
**dass** die Nut (12, 13) einen Kreisbogen von 270° ausbildet und das Einschubelement (3) so positioniert ist, dass die unteren 90° des Kreisumfangs nicht von der Nut (12, 13) umlaufen werden.

3. Rohr nach einem der vorherigen Ansprüche, **dadurch gekennzeichnet,**
**dass** das Einschubelement (3) in Strömungsrichtung (S) vor und/oder hinter der umlaufenden Nut (12, 18) gegen den rohrförmigen Träger (2) abgedichtet ist.

4. Rohr nach Anspruch 3, **dadurch gekennzeichnet,**
**dass** beidseitig der umlaufenden Nut (12, 18) die Außenfläche des Einschubelements (3) umlaufende Dichtungen (14, 19, 20) vorgesehen sind.

5. Rohr nach Anspruch 3, **dadurch gekennzeichnet,**
**dass** die Dichtigkeit der umlaufenden Nut (12, 18) mittels einer stoffschlüssigen Verbindung zwischen rohrförmigen Träger (2) und Einschubelement (3) hergestellt ist.

6. Rohr nach einem der vorherigen Ansprüche, **dadurch gekennzeichnet,**
**dass** die umlaufende Nut (12, 18) in einer Außenwand (11) des Einschubelements (3) ausgebildet ist

7. Rohr nach einem der vorherigen Ansprüche, **dadurch gekennzeichnet,**
**dass** das Einschubelement (3) eine erste (12) und eine zweite (18) umlaufende Nut umfasst, wobei die erste Nut (12) mit einem die Wand des Trägers (2) durchdringende ersten Kanal (13) und die zweite Nut (18) mit einem die Wand des Trägers (2) durchdringenden zweiten Kanal (21) verbunden ist.

8. Rohr nach einem der vorherigen Ansprüche, **dadurch gekennzeichnet,**
**dass** ein Teilbereich der Innenwand (4) des Trägers (2) einen Sitz (22) für das Einschubelement (3) ausbildet.

## Claims

1. A tube for measuring the differential pressure of a medium flowing through the pipe, wherein the tube (1) comprises a tubular carrier (2) and a tubular insertion element (3), wherein the insertion element (3) is arranged on the inner wall (4) of the carrier (2), and wherein the insertion element (3) at least forms sections of an inner profile (5) of the tube (1),
wherein two channels (13, 21) penetrating the wall of the carrier (2) are arranged one after the other in the flow direction (S) of the medium, and
wherein a groove (12, 18) surrounding the outer surface (11) of the insertion element (3) is arranged between the insertion element (3) and the inner wall (4) of the carrier (2), wherein the circumferential groove (12, 18) is connected on the one hand via a plurality of holes (9, 16) provided in the insertion element (3) to the interior of the insertion element (3), through which medium flows, and on the other hand to one of the channels (13, 21),
**characterized**
**in that** the groove (12, 18) is formed in the form of an arc of a circle,
**in that** the groove (12, 18) does not completely surround the circumference of the insertion element (3),
**in that** the arc of a circle formed by the groove (12, 18) is orientated downwards in the region of the two ends thereof,
**in that** a liquid collected at both ends of the arc of a circle can be drained back into the inner profile of the insertion element (3) through one hole (9, 16) set in this region in each case.

2. The tube according to Claim 1,
**characterized**
**in that** the groove (12, 13) forms an arc of a circle of 270° and the insertion element (3) is positioned in such a manner that the lower 90° of the circle circumference is not surrounded by the groove (12, 13).

3. The tube according to one of the preceding claims,
**characterized**
**in that** the insertion element (3) is sealed with respect to the tubular carrier (2) upstream and/or downstream of the circumferential groove (12, 18) in the flow direction (S).

4. The tube according to Claim 3,
**characterized**
**in that** seals (14, 19, 20) surrounding the outer surface of the insertion element (3) are provided on both sides of the circumferential groove (12, 18).

5. The tube according to Claim 3,
**characterized**
**in that** the leaktightness of the circumferential groove (12, 18) is produced by means of a materially-bonded connection between tubular carrier (2) and insertion element (3).

6. The tube according to one of the preceding claims,
**characterized**
**in that** the circumferential groove (12, 18) is constructed in an outer wall (11) of the insertion element (3).

7. The tube according to one of the preceding claims,
**characterized**
**in that** the insertion element (3) comprises a first (12) and a second (18) circumferential groove, wherein the first groove (12) is connected to a first channel (13) penetrating the wall of the carrier (2) and the second groove (18) is connected to a second channel (21) penetrating the wall of the carrier (2).

8. The tube according to one of the preceding claims,
**characterized**
**in that** a section of the inner wall (4) of the carrier (2) constructs a seat (22) for the insertion element (3) .

## Revendications

1. Tube destiné à la mesure de la pression différentielle d'un milieu traversant le Tube, sachant que le tube (1) comprend un support (2) de forme tubulaire et un élément emboîtable (3) de forme tubulaire, sachant que l'élément emboîtable (3) est disposé sur la paroi intérieure (4) du support (2), sachant que l'élément emboîtable (3) constitue au moins des parties de zone d'un profilé intérieure (5) du tube (1),
sachant que deux conduits (13, 21) traversant la paroi du support (2) sont disposées l'un derrière l'autre dans la direction d'écoulement (S) du milieu, et
sachant qu'une rainure (12, 18) entourant la surface extérieure (11) de l'élément emboîtable (3) est disposée entre l'élément emboîtable (3) et la rainure intérieure (4) du support (2), sachant que la paroi périphérique (12, 18) est reliée d'une part par une pluralité de trous (9, 16) prévue dans l'élément emboîtable (3) à l'espace intérieur traversé par le milieu de l'élément emboîtable (3) et est reliée d'autre part à un des conduits (13, 21),
**caractérisé**
**en ce que** la rainure (12, 18) est constituée sous la forme d'un arc de cercle,
**en ce que** la rainure (12, 18) n'entoure pas complètement la périphérie de l'élément emboîtable (3),
**en ce que** l'arc de cercle formé par la rainure (12, 18) est orienté vers le bas dans la zone de ses deux extrémités,
**en ce qu'**un liquide accumulé aux deux extrémités de l'arc de cercle peut être dévié à nouveau dans le profilé intérieur de l'élément emboîtable (3) respectivement à travers un des trous (9, 16) se situant à côté dans cette zone.

2. Tube selon la revendication 1,
**caractérisé**
**en ce que** la rainure (12, 13) constitue un arc de cercle de 270° et l'élément emboîtable (3) est positionné de telle manière que les 90° inférieurs de la circonférence ne sont pas entourés par la rainure (12, 13).

3. Tube selon l'une quelconque des revendications précédentes,
**caractérisé**
**en ce que** l'élément emboîtable (3) est étanchéifié dans la direction de l'écoulement (S) devant et/ou derrière la rainure périphérique (12, 18) contre le support de forme tubulaire (2).

4. Tube selon la revendication 3,
**caractérisé**
**en ce que** des joints d'étanchéité (14, 19, 20) entourant la surface extérieure de l'élément emboîtable (3) sont prévus des deux côtés de la rainure périphérique (12, 18) .

5. Tube selon la revendication 3,
**caractérisé**
**en ce que** l'étanchéité de la rainure périphérique (12, 18) est établie au moyen d'un liaison par conformité de matière entre le support de forme tubulaire (2) et l'élément emboîtable (3).

6. Tube selon l'une quelconque des revendications précédentes,
**caractérisé**
**en ce que** la rainure périphérique (12, 18) est constituée dans une paroi extérieure (11) de l'élément emboîtable (3).

7. Tube selon l'une quelconque des revendications précédentes,
**caractérisé**
**en ce que** l'élément emboîtable (3) comprend une première rainure périphérique (12) et une deuxième (18), sachant que la première rainure (12) est reliée à un premier conduit (13) traversant la paroi du support (2) et la deuxième rainure (18) à un deuxième conduit (21) traversant la paroi du support (2).

8. Tube selon l'une quelconque des revendications précédentes,
**caractérisé**
**en ce qu'**une partie de zone de la paroi intérieure (4) du support (2) constitue un assise (22) pour l'élément emboîtable (3).
